(19) Europäisches Patentamt
European Patent Office
Office européen des brevets

(11) **EP 2 296 260 A2**

(12) **EUROPEAN PATENT APPLICATION**

(43) Date of publication:
**16.03.2011 Bulletin 2011/11**

(51) Int Cl.:
**H02M 1/32** (2007.01)

(21) Application number: **10251197.9**

(22) Date of filing: **02.07.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **02.07.2009 CN 200910059878**

(71) Applicant: **Monolithic Power Systems, Inc.
San Jose, CA 95120 (US)**

(72) Inventors:
• **Hu, Jin
  Hangzhou 310012 (CN)**
• **Zhang, Junming
  Hangzhou 310012 (CN)**
• **Ren, Yuancheng
  Hangzhou 310012 (CN)**

(74) Representative: **Leach, James et al
Mewburn Ellis LLP
33 Gutter Lane
London EC2V 8AS (GB)**

Remarks:
Claims 19, 20 and 22 are deemed to be abandoned due to non-payment of the claims fees (Rule 45(3) EPC).

(54) **Switching regulator with fault protection and method thereof**

(57)  A switching regulator with fault protection and method thereof. The switching regulator comprises a switching circuit, a control circuit, a fault detection circuit and a fault timer. The fault detection circuit is electrically coupled to the switching circuit to detect whether a fault condition exists and generate a fault signal accordingly. The fault timer starts to time once the fault signal becomes valid, and is reset when the fault signal becomes invalid. If the fault time reaches a first time threshold, the control circuit is disabled, and the switch in the switching circuit is turned off.

Figure 1

**Description**

This application claims priority to and the benefit of Chinese Patent Application No. 200910059878.1 filed on July 2, 2009, which is incorporated herein by reference in its entirety.

The present invention generally relates to electrical circuits, and more particularly, preferably relates to a switching regulator with fault protection.

A DC voltage is used as the power supply in many electronic devices. Generally, the DC voltage is derived from an AC power source. The AC voltage is generally rectified into an unregulated DC voltage by a rectifier bridge. The unregulated DC voltage is generally converted into the DC voltage as needed by a switching regulator.

A transformer or inductor is usually used as a tank element in the switching regulator. For example, a transformer may be used in the flyback converter. A switch may be electrically coupled to the primary winding of the transformer. The switch may be turned on and off so as to alternately store energy in the transformer and transfer the stored energy to the secondary winding of the transformer. An output capacitor may be electrically coupled to the secondary winding of the transformer and a rectified voltage may be generated thereon. The rectified voltage may provide the DC output voltage of the switching power supply. The DC output voltage may increase and decrease inversely with the load. The heavier the load, which means the higher the output current, the lower the output voltage may be, and vice versa. Generally, the DC output voltage is fed back to control compensation for the variation of the load.

Various fault protections, such as over temperature protection, over current protection, over voltage protection, over load protection, under voltage protection and so on, may be needed in the switching regulator. Generally, the switching regulator will be shut down if any fault condition is detected. But this method may cause mis-protection under some conditions. For example, the output voltage of the switching regulator may be sensed to detect whether an over load condition exists. The over load condition may be detected if the output voltage is larger than a threshold. However, when the switching regulator is just started, its output voltage may be smaller than the threshold because of the time. The switching regulator will generally be shut down immediately.

In one embodiment, a switching regulator preferably comprises a switching circuit, a control circuit, a fault detection circuit and a fault timer. The fault detection circuit is preferably electrically coupled to the switching circuit to detect whether a fault condition exists and generate a fault signal accordingly. Preferably, the fault timer starts to time once the fault signal becomes valid, and is reset when the fault signal becomes invalid. Preferably, if the fault time reaches a first time threshold, the control circuit is disabled, and the switch in the switching circuit is turned off.

These and other preferred features of the present invention will be readily apparent to persons of ordinary skill in the art upon reading the entirety of this disclosure, which includes the accompanying drawings and claims.

BRIEF DESCRIPTION OF THE DRAWINGS

The present invention can be further understood with reference to the following detailed description and the appended drawings, wherein like elements are provided with like reference numerals.

Figure 1 is a block diagram of a switching regulator with fault protection, in accordance with one embodiment of the present invention.

Figure 2 is a waveform of a switching regulator with fault protection, in accordance with one embodiment of the present invention.

Figure 3 is a waveform of a switching regulator with fault protection, in accordance with another embodiment of the present invention.

Figure 4 illustrates an off time controlled switching regulator with fault protection, in accordance with one embodiment of the present invention.

Figure 5 illustrates an off time controlled switching regulator with fault protection, in accordance with another embodiment of the present invention.

Figure 6 illustrates a quasi-resonant controlled switching regulator with fault protection, in accordance with one embodiment of the present invention.

Figure 7 illustrates a quasi-resonant controlled switching regulator with fault protection, in accordance with another embodiment of the present invention.

Figure 8 illustrates a fixed frequency controlled switching regulator with fault protection, in accordance with one embodiment of the present invention.

Figure 9 illustrates a fixed frequency controlled switching regulator with fault protection, in accordance with another embodiment of the present invention.

Figure 10 is a flow chart of a fault protection method used in a switching regulator, in accordance with one embodiment of the present invention.

Reference will now be made in detail to the preferred embodiments of the invention, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of the present invention, numerous specific details are set forth in order to provide a thorough understanding of the present invention. However, it will be obvious to one of ordinary skill in the art that the present invention may be practiced without these specific details. In other instances, well-known methods, procedures, components, and circuits have not been described in detail so as not to unnecessarily obscure aspects of the present invention.

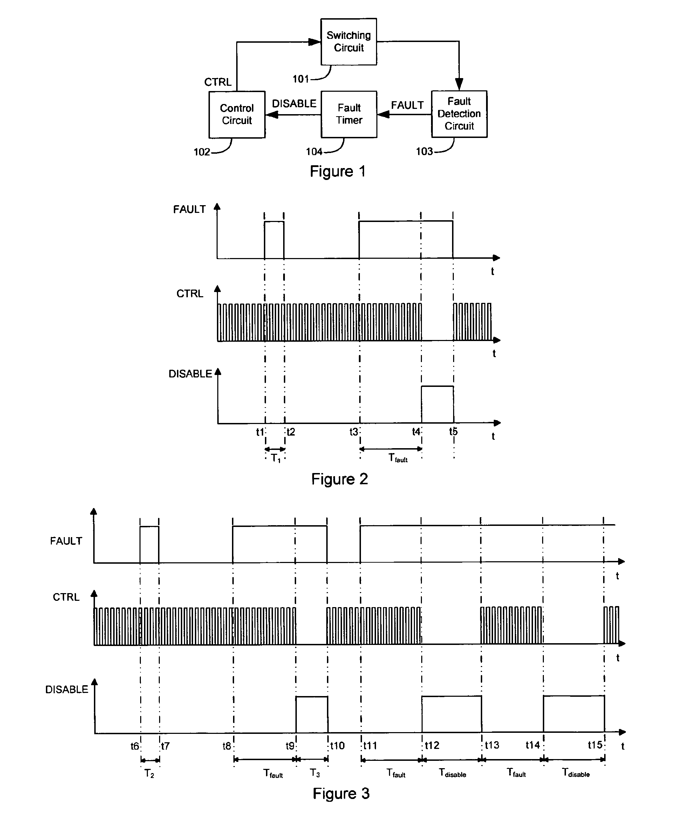

Figure 1 is a block diagram of a switching regulator with fault protection, in accordance with one embodiment of the present invention. It comprises a switching circuit 101, a control circuit 102, a fault detection circuit 103 and a fault timer 104. The switching circuit 101 comprises a switch and a tank element electrically coupled to the switch. The tank element stores energy when the switch is on, and the stored energy is transferred to the load when the switch is off. The switching circuit 101 may utilize any DC/DC topology, such as buck, boost, buck-boost, flyback, forward, and so on. The control circuit 102 is electrically coupled to the switching circuit 101, generates a control signal CTRL to control the on and off of the switch. In one embodiment, a working parameter of the switching circuit 101, such as voltage, current or power, is fed back to the control circuit 102.

The fault detection circuit 103 is electrically coupled to the switching circuit 101 to detect whether a fault condition exists and generate a fault signal FAULT accordingly. The fault condition may be one or more of the over voltage, over load, short circuit, under voltage and so on, and is detected through monitoring working parameters of the switching circuit 101, such as temperature, voltage, current and power. If the fault condition is detected, the fault signal FAULT is valid, else, it is invalid. The fault timer 104 is electrically coupled to the fault detection circuit 401 and the control circuit 102, receives the fault signal FAULT and generates a disable signal DISABLE accordingly. The fault timer 104 starts to time once the fault signal FAULT becomes valid, and is reset when the fault signal FAULT is invalid. If the fault time reaches a first time threshold $T_{fault}$, the disable signal DISABLE becomes valid. The control circuit 102 is disabled, and the switch is turned off by the control signal CTRL. In one embodiment, the fault timer 104 is realized by a counter counting the pulses in a pulse signal. The first time threshold $T_{fault}$ is reached when the counting value reaches a first value n. In one embodiment, the control signal CTRL is used as the pulse signal.

In one embodiment, if the fault condition disappears after the control circuit 102 being disabled, the disable signal DISABLE becomes invalid and the control circuit 102 is enabled. This fault protection mode is called auto-restart mode. Figure 2 is a waveform of a switching regulator under auto-restart mode, wherein the fault signal FAULT and the disable signal DISABLE are both high effective. The switch is turned on when the control signal CTRL is high and turned off when the control signal CTRL is low.

As shown in Figure 2, during t<t1, the switching regulator works normally and the fault signal FAULT is invalid. At t=t1, a fault condition is detected. The fault signal FAULT becomes valid, and the fault timer 104 starts to time. During t1<t<t2, the fault condition remains, and the fault timer 104 continues timing. The fault time is T1 at t=t2, wherein T1<$T_{fault}$. So during t1<t<t2, the disable signal DISABLE is invalid and the control circuit 102 works normally. At t=t2, the fault condition disappears. The fault signal FAULT becomes invalid and the fault timer is reset.

During t2<t<t3, the switching regulator works normally and the fault signal FAULT is invalid. At t=t3, a fault condition is detected. The fault signal FAULT becomes valid, and the fault timer 104 starts to time. During t3<t<t4, the fault condition remains, and the fault timer 104 continues timing. At t=t4, the fault time reaches the first time threshold $T_{fault}$. The disable signal DISABLE becomes valid and the control circuit 102 is disabled. The control signal CTRL becomes low to turn off the switch. At t=t5, the fault condition disappears. The disable signal DISABLE as well as the fault signal FAULT becomes invalid and the control circuit 102 is enabled.

In another embodiment, after the control circuit 102 being disabled, the fault timer 104 is reset and starts to time again. The control circuit 102 is enabled if the disable time reaches a second time threshold $T_{disable}$. The fault timer 104 is reset and starts to time again. If the fault time reaches the first time threshold $T_{fault}$, the control circuit 102 is disabled again. This process repeats till the fault condition disappears. If the fault condition disappears, the disable signal DISABLE becomes invalid and the control circuit 102 is enabled. This fault protection mode is called smart restart mode.

In one embodiment, the fault timer 104 is realized by a counter through counting pulses in a pulse signal. The first time threshold $T_{fault}$ is reached when the count value reaches the first value n. The second time threshold $T_{disable}$ is reached when the count value reaches a second value m. The first value n and the second value m may be equal, or unequal. The frequency of the pulse signal may be related, or not related to the switching frequency of the switch. In one embodiment, a single pulse signal is used. The frequencies of the pulse signal before and after the control circuit 102 being disabled are different. In one embodiment, different pulse signals are used before and after the control circuit 102 being disabled.

Figure 3 is a waveform of a switching regulator under smart restart mode, in accordance with one embodiment of the present invention, wherein the fault signal FAULT and the disable signal DISABLE are both high effective. The switch is turned on when the control signal CTRL is high and turned off when the control signal CTRL is low. As shown in Figure 3, during t<t6, the switching regulator works normally and the fault signal FAULT is invalid. At t=t6, a fault condition is detected. The fault signal FAULT becomes valid, and the fault timer 104 starts to time. During t6<t<t7, the fault condition remains, and the fault timer 104 continues timing. The fault time is $T_2$ at t=t7, wherein $T_2$<$T_{fault}$. So during t6<t<t7, the disable signal DISABLE is invalid and the control circuit 102 works normally. At t=t7, the fault condition disappears. The fault signal FAULT becomes invalid and the fault timer is reset.

During t7<t<t8, the switching regulator works normally and the fault signal FAULT is invalid. At t=t8, a fault condition is detected. The fault signal FAULT becomes valid, and the fault timer 104 starts to time. During t8<t<t9, the fault condition remains, and the fault timer 104 continues timing. At t=t9, the fault time reaches the first time threshold $T_{fault}$. The disable signal DISABLE becomes valid and the control circuit 102 is disabled. The control signal CTRL becomes low to turn off the switch. The fault timer 104 is reset and starts to time again. During t9<t<t10, the fault condition remains and the fault timer 104 continues timing. The disable time is $T_3$ at t=t10, wherein $T_3 < T_{disable}$. So during t9<t<t10, the disable signal DISABLE is valid and the control circuit 102 is disabled. At t=t10, the fault condition disappears. The disable signal DISABLE as well as the fault signal FAULT becomes invalid. The fault timer is reset and the control circuit 102 is enabled.

During t10<t<t11, the switching regulator works normally and the fault signal FAULT is invalid. At t=t11, a fault condition is detected. The fault signal FAULT becomes valid, and the fault timer 104 starts to time. During t11<t<t12, the fault condition remains, and the fault timer 104 continues timing. At t=t12, the fault time reaches the first time threshold $T_{fault}$. The disable signal DISABLE becomes valid and the control circuit 102 is disabled. The control signal CTRL becomes low to turn off the switch. The fault timer 104 is reset and starts to time again. During t12<t<t13, the fault condition remains and the fault timer 104 continues timing. At t=t13, the disable time reaches the second time threshold $T_{disable}$. The disable signal DISABLE becomes invalid and the control circuit 102 is enabled. The fault timer 104 is reset and starts to time again. This process repeats till the fault condition disappears.

Generally, the control circuit 102, the fault detection circuit 103 and the fault timer 104 are integrated into an IC (integrated circuit). Since the number of pins in the IC is limited to reduce cost and save space, it is hard to find a pin to provide a pulse signal to the fault timer 104.

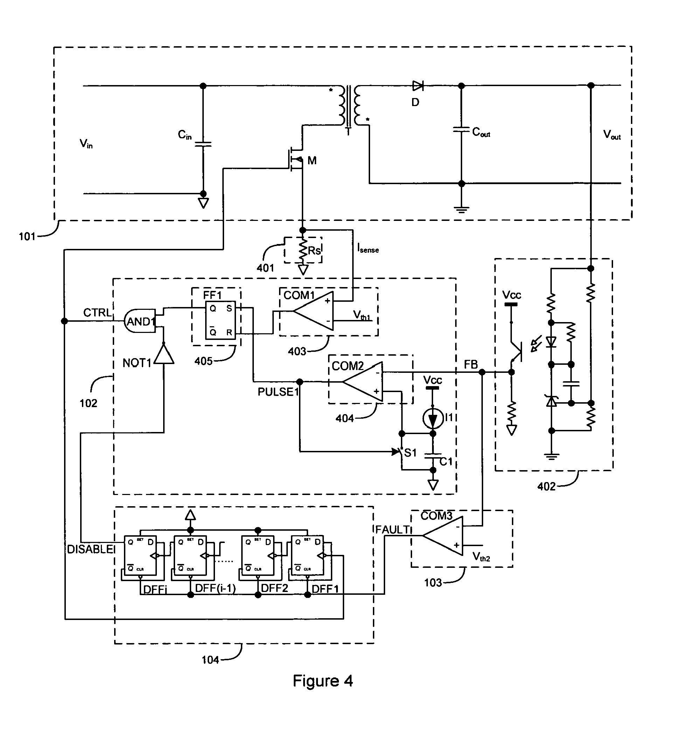

Figure 4 illustrates an off time controlled switching regulator with fault protection, in accordance with one embodiment of the present invention. It comprises a switching circuit 101, a control circuit 102, a fault detection circuit 103, a fault timer 104, a current sensing circuit 401 and a voltage feedback circuit 402. An off time control is used here. The current flowing through the switch is compared with a current threshold and the switch is turned off when the current becomes larger than the current threshold. The off time of the switch is determined by the load. The heavier the load, the shorter the off time; the lighter the load, the longer the off time.

A flyback topology is used in the switching circuit 101. The switching circuit 101 comprises an input capacitor $C_{in}$, a transformer T, a switch M, a diode D and an output capacitor $C_{out}$, connected as shown in Figure 4. The voltage across the output capacitor $C_{out}$ is the output voltage $V_{out}$ of the switching regulator. The switch M may be any controllable semiconductor device, such as MOSFET (metal oxide semiconductor field effect transistor), IGBT (isolated gate bipolar transistor) and so on. In one embodiment, the diode D is replaced by a synchronous switch.

The current sensing circuit 401 is electrically coupled to the switch M to sense the current flowing through the switch M and generate a current sensing signal $I_{sense}$ representative of it. The current sensing circuit 401 may be realized by resistor, transformer, current amplifier and so on. The voltage feedback circuit 402 is electrically coupled to the output terminals of the switching regulator to sense the output voltage $V_{out}$ and generate a feedback signal FB accordingly. The voltage feedback circuit 402 may comprise a photocoupler or a transformer. In one embodiment, the transformer T further comprises an auxiliary winding. The voltage feedback circuit 402 is electrically coupled to the auxiliary winding to sense the voltage across it. The voltage across the auxiliary winding can represent the output voltage $V_{out}$.

The control circuit 102 comprises a capacitor C1, a current source I1, a switch S1, a first comparison circuit 403, a second comparison circuit 404, a first logic circuit 405, gate circuits AND1 and NOT1. One terminal of the current source I1 receives a reference voltage $V_{cc}$. The capacitor C1 and the switch S1 are electrically connected in parallel and electrically connected between the other terminal of the current source 11 and the ground.

The first comparison circuit 403 is electrically coupled to the current sensing circuit 401, compares the current sensing signal $I_{sense}$ with a threshold $V_{th1}$. The second comparison circuit 404 is electrically coupled to the capacitor C1 and the voltage feedback circuit 402, compares the voltage across the capacitor C1 with the feedback signal FB. The output terminal of the second comparison circuit 404 is electrically coupled to the gate of the switch S1, provides a signal PULSE1 to control the on and off of the switch S1.

The first logic circuit 405 is electrically coupled to the output terminals of the first comparison circuit 403 and the second comparison circuit 404, controls the on and off of the switch M based on the comparison results under normal operation. The input terminal of the gate circuit NOT1 is electrically connected to the fault timer 104 to receive the disable signal DISABLE. One input terminal of the gate circuit AND1 is electrically connected to the output terminal of the gate circuit NOT1, the other input terminal is electrically connected to the output terminal of the first logic circuit 405. The output terminal of the gate circuit AND1 provides the control signal CTRL.

In one embodiment, the switch M is a NMOS (n type MOSFET). The current sensing circuit 401 comprises a resistor $R_s$ which is electrically connected between the source of the switch M and the ground. The voltage sensing circuit 402 is electrically coupled to the output terminals of the switching circuit 101, and comprises a photocoupler and a shunt regulator. The feedback signal FB is increased and decreased along with the output voltage $V_{out}$.

The first comparison circuit 403 comprises a comparator COM1. The non-inverting input terminal of the comparator COM1 is electrically connected to the resistor $R_s$ to receive the current sensing signal $I_{sense}$. The inverting input terminal of the comparator COM1 receives the threshold $V_{th1}$. The second comparison circuit 404 comprises a comparator COM2. The non-inverting input terminal of the comparator COM2 is electrically connected to the capacitor C1 to receive the voltage across it. The inverting input terminal of the comparator COM2 is electrically connected to the voltage feedback circuit 402 to receive the feedback signal FB. The output terminal of the comparator COM2 provides the signal PULSE1.

The first logic circuit 405 comprises a flip-flop FF1. The flip-flop FF1 comprises a set terminal and a reset terminal, wherein both of them are high effective. The set terminal is electrically connected to the output terminal of the comparator COM2. The restart terminal is electrically connected to the output terminal of the comparator COM1. The output terminal of the flip-flop FF1 is the output terminal of the first logic circuit 405.

The fault detection circuit 103 detects whether an over load condition exists. It comprises a comparator COM3. The non-inverting input terminal of the comparator COM3 receives a threshold $V_{th2}$, the inverting input terminal is electrically connected to the voltage feedback circuit 402 to receive the feedback signal FB. The output terminal of the comparator COM3 provides the fault signal FAULT. If the feedback signal FB is smaller than the threshold $V_{th2}$, an over load condition is detected. The fault signal FAULT is valid (high level). Else, the fault signal FAULT is invalid (low level).

The fault timer 104 comprises multiple serially connected flip-flops DFF1~DFFi, wherein i is a positive integer. Each flip-flop comprises a data terminal, a clock terminal, a non-inverting output terminal, an inverting output terminal, a reset terminal and a set terminal. The clock terminal is falling edge effective. The reset terminal is low effective and the set terminal is high effective. The data terminal of each flip-flop is electrically connected to the inverting output terminal of itself. The set terminal is grounded. The reset terminal is electrically connected to the fault detection circuit 103 to receive the fault signal FAULT. The clock terminal of the flip-flop DFF1 is electrically connected to the output terminal of the gate circuit AND1 to receive the control signal CTRL. The clock terminals of the flip-flops DFF2~DFFi are separately connected to the non-inverting output terminals of the flip-flops DFF1~DFF(i-1). The non-inverting output terminal of the flip-flop DFFi provides the disable signal DISABLE. The disable signal DISABLE is initially low, and inversed after every $2^{i-1}$ pulses.

The switching regulator shown in Figure 4 works under auto-restart mode. When the switching circuit 101 works normally, the feedback signal FB is larger than the threshold $V_{th2}$, and the fault signal FAULT is low. Flip-flops DFF1~DFFi are all reset, and the disable signal DISABLE is low. The control circuit 102 works normally, and the control signal CTRL is the output signal of flip-flop FF1. If an over load condition happens, the feedback signal FB becomes smaller than the threshold $V_{th2}$ and the fault signal FAULT becomes high. The fault timer 104 starts to time, wherein the pulse signal is the control signal CTRL. If the first time threshold $T_{fault}$

$$\left( T_{fault} = \sum_{p=1}^{2^{i-1}} T_p \right. ,$$ wherein T is the switching period of the switch M) is reached, the disable signal DISABLE becomes high. The output signal of the gate circuit NOT1 is low, and the control circuit 102 is disabled. The control signal CTRL is low and the switch M is turned off. The control circuit 102 won't be enabled again until the fault signal FAULT becomes invalid (low) to reset the flip-flops DFF1~DFFi. However, since the switch M is turned off after the control circuit 102 being disabled, the voltage $V_{out}$ won't be increased. So the fault signal FAULT won't become invalid until the switching regulator being wholly restarted.

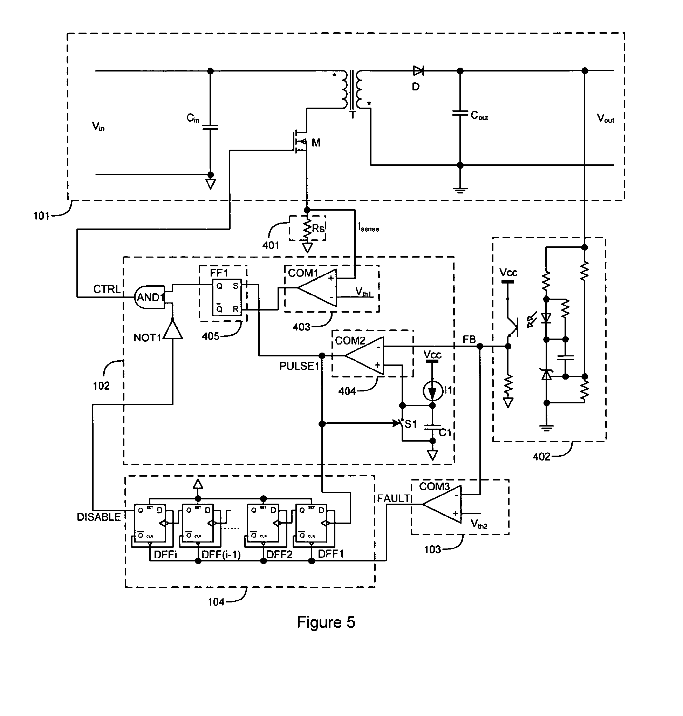

Figure 5 illustrates an off time controlled switching regulator with fault protection, in accordance with another embodiment of the present invention. It is similar to the switching regulator shown in Figure 4. However, the clock terminal of the flip-flop DFF1 is electrically connected to the output terminal of the comparator COM2. The signal PULSE1 is used as the pulse signal of the fault timer 104. T

The switching regulator shown in Figure 5 works under smart restart mode. When the switching circuit 101 works normally, the feedback signal FB is larger than the threshold $V_{th2}$, and the fault signal FAULT is low. Flip-flops DFF1~DFFi are all reset, and the disable signal DISABLE is low. The control circuit 102 works normally, and the control signal CTRL is the output signal of flip-flop FF1. If an over load condition happens, the feedback signal FB becomes smaller than the threshold $V_{th2}$ and the fault signal FAULT becomes high. The fault timer 104 starts to time, wherein the pulse signal is the signal PULSE1. If the first time threshold $T_{fault}$

$$\left( T_{fault} = \sum_{p=1}^{2^{i-1}} T_{pulse1(p)} \right. ,$$ wherein $T_{pulse1}$ is the period of the signal PULSE1) is reached, the disable signal DISABLE becomes high. The output signal of the gate circuit NOT1 is low, and the control circuit 102 is disabled. The Control signal CTRL is low and the switch M is turned off.

The fault timer 104 continues timing. If the second time threshold $T_{disable}$ $\left(T_{disable} = \sum_{p=1}^{2^{i-1}} T_{pulse1(p)}\right)$

is reached, the disable signal DISABLE is inversed and become low.

The control circuit 102 is enabled. The fault timer 104 keeps timing. This process repeats till the over load condition disappears. In one embodiment, the current value of the current source 11 before and after the control circuit 102 being disabled are different, so as to let the first time threshold $T_{fault}$ be different from the second time threshold $T_{disable}$.

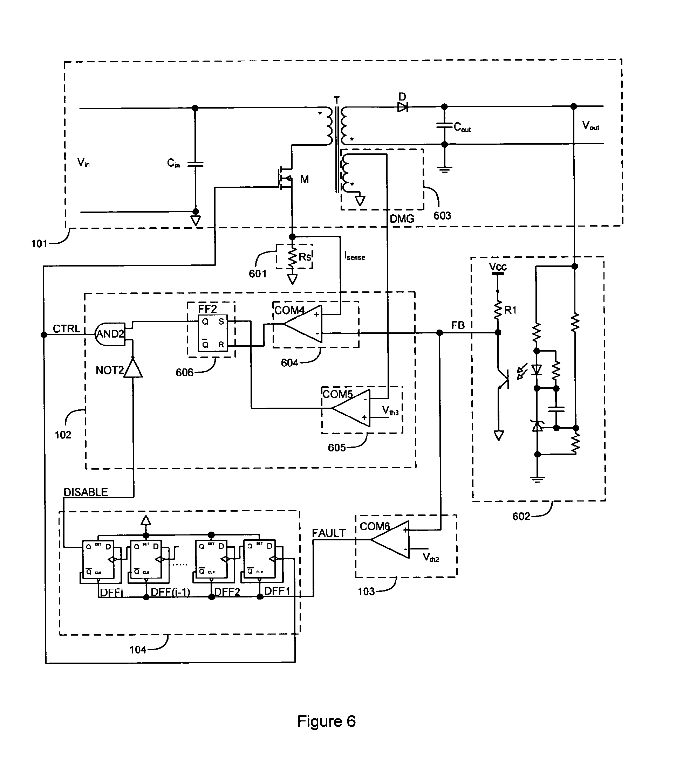

Figure 6 illustrates a quasi-resonant controlled switching regulator with fault protection, in accordance with one embodiment of the present invention. It comprises a switching circuit 101, a control circuit 102, a fault detection circuit 103, a fault timer 104, a current sensing circuit 601, a voltage feedback circuit 602 and a switch voltage sensing circuit 603. The configuration of the switching circuit 101, fault timer 104 and current sensing circuit 601 is similar to that of the corresponding circuit in Figure 4. A quasi-resonant control is used here. The switching regulator works under discontinuous current mode. The transformer T stores energy when the switch M is on. The stored energy is transferred to the load when the switch M is off. After all the stored energy being transferred to the load, the magnetization inductance of the transformer T becomes resonant with the parasitic capacitance of the switch M. The switch M is turned on when the voltage across the switch M reaches its resonant valley, so as to reduce the power loss and enhance the efficiency.

The switch voltage sensing circuit 603 is electrically coupled to the switch M to sense the voltage across the switch M and generate a switch voltage sensing signal DMG accordingly. The control circuit 102 comprises a third comparison circuit 604, a fourth comparison circuit 605, a second logic circuit 606, gate circuits AND2 and NOT2. The third comparison circuit 604 is electrically coupled to the current sensing circuit 601 and the voltage feedback circuit 602 to compare the current sensing signal $I_{sense}$ with the feedback signal FB. The fourth comparison circuit 605 is electrically coupled to the switch voltage sensing circuit 603 to compare the switch voltage sensing signal DMG with a threshold $V_{th3}$. The second logic circuit 606 is electrically coupled to the third comparison circuit 604 and the fourth comparison circuit 605, controls the on and off of the switch M based on the comparison results under normal operation. The input terminal of the gate circuit NOT2 is electrically connected to the fault timer 104 to receive the disable signal DISABLE. One input terminal of the gate circuit AND2 is electrically connected to the output terminal of the gate circuit NOT2, the other input terminal is electrically connected to the output terminal of the second logic circuit 606. The output terminal of the gate circuit AND2 provides the control signal CTRL.

In one embodiment, the transformer T further comprises an auxiliary winding. The switch voltage sensing circuit 404 is electrically coupled to the auxiliary winding to sense the voltage across it and generate the switch voltage sensing signal DMG accordingly. The voltage sensing circuit 602 is electrically coupled to the output terminal of the switching circuit 101, comprises a photocoupler and a shunt regulator. The feedback signal FB is increased and decreased reversely with the output voltage $V_{out}$.

The third comparison circuit 604 comprises a comparator COM4. The non-inverting input terminal of the comparator COM4 is electrically connected to the current sensing circuit 601 to receive the current sensing signal $I_{sense}$. The inverting input terminal of the comparator COM4 is electrically connected to the voltage feedback circuit 602 to receive the feedback signal FB. The fourth comparison circuit 605 comprises a comparator COM5. The non-inverting input terminal of the comparator COM5 receives the threshold $V_{th3}$. The inverting input terminal of the comparator COM5 is electrically connected to the switch voltage sensing circuit 603 to receive the switch voltage sensing signal DMG.

The second logic circuit 606 comprises a flip-flop FF2. The flip-flop FF2 comprises a set terminal and a reset terminal, wherein both of them are high effective. The set terminal of the flip-flop FF2 is electrically connected to the output terminal of the comparator COM5, the reset terminal is electrically connected to the output terminal of the comparator COM4. The output terminal of the flip-flop FF2 is the output terminal of the second logic circuit 606.

The fault detection circuit 103 detects whether an over load condition exists. It comprises a comparator COM6. The inverting input terminal of the comparator COM6 receives a threshold $V_{th2}$. The non-inverting input terminal of the comparator COM6 is electrically connected to the voltage feedback circuit 602 to receive the feedback signal FB. The output terminal of the comparator COM6 provides the fault signal FAULT. If the feedback signal FB is larger than the threshold $V_{th2}$, an over load condition is detected. The fault signal FAULT is valid (high level). Else, the fault signal FAULT is invalid (low level).

The switching regulator shown in Figure 6 works under auto-restart mode. When the switching circuit 101 works normally, the feedback signal FB is smaller than the threshold $V_{th2}$, and the fault signal FAULT is low. Flip-flops DFF1~DFFi are all reset, and the disable signal DISABLE is low. The control circuit 102 works normally, and the control signal CTRL is the output signal of the flip-flop FF2. If an over load condition happens, the feedback signal FB becomes larger than the threshold $V_{th2}$ and the fault signal FAULT becomes high. The fault timer 104 starts to time, wherein the pulse signal is the control signal CTRL. If the first time threshold $T_{fault}$

$$\left(T_{fault} = \sum_{p=1}^{2^{i-1}} T_p\right)$$ is reached, the disable signal DISABLE becomes high. The output signal of the gate circuit NOT2 is low, and the control circuit 102 is disabled. The control signal CTRL is low and the switch M is turned off.

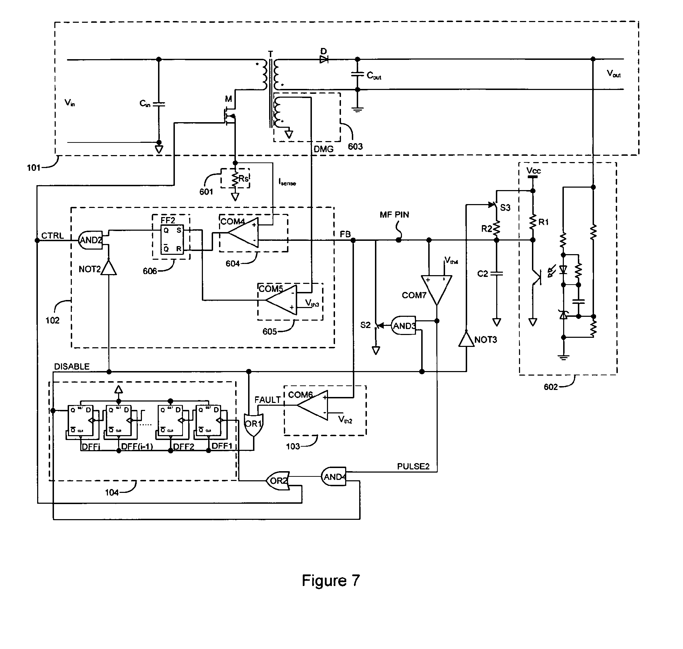

Figure 7 illustrates a quasi-resonant controlled switching regulator with fault protection, in accordance with another embodiment of the present invention. It is similar to the switching regulator shown in Figure 6. However, the control circuit 102, the fault detection circuit 103 and the fault timer 104 are integrated into an IC which comprises a multifunctional pin. In Figure 7, the multifunctional pin is the node labeled as "MF PIN". When the control circuit 102 works normally, the multifunctional pin is used to receive the feedback signal FB, and the control signal CTRL is used as the pulse signal of the fault timer 104. When the control circuit 102 is disabled, the multifunctional pin is used to help generating a signal PULSE2 together with some external elements, and the signal PULSE2 is used as the pulse signal of the fault timer 104.

Compared with the switching regulator shown in Figure 6, the switching regulator shown in Figure 7 further comprises a capacitor C2, a switch S2, a comparator COM7, and gate circuits AND3, AND4, OR1 and OR2. The capacitor C2 and switch S2 are electrically connected in parallel, and electrically connected between the multifunctional pin and the ground. The non-inverting input terminal of the comparator COM7 is electrically connected to the multifunctional pin, the inverting input terminal receives a threshold $V_{th4}$. The output terminal of the comparator COM7 provides the signal PULSE2. One input terminal of the gate circuit AND3 is electrically connected to the fault timer 104 to receive the disable signal DISABLE, the other input terminal is electrically connected to the output terminal of the comparator COM7 to receive the signal PULSE2. The output terminal of the gate circuit AND3 is electrically coupled to the gate of the switch S2 to control the on and off of the switch S2. One input terminal of the gate circuit AND4 is electrically connected to the output terminal of the comparator COM7 to receive the signal PULSE2, the other input terminal is electrically connected to the fault timer 104 to receive the disable signal DISABLE. One input terminal of the gate circuit OR2 is electrically connected to the output terminal of the gate circuit AND4, the other input terminal is electrically connected to the control circuit 102 to receive the control signal CTRL. The output terminal of the gate circuit OR2 is electrically connected to the clock terminal of the flip-flop DFF1.

The switching regulator shown in Figure 7 works under smart restart mode. When the switching circuit 101 works normally, the feedback signal FB is smaller than the threshold $V_{th2}$ and the fault signal FAULT is low. The output signal of the gate circuit OR1 is low. Flip-flops DFF1~DFFi are all reset, and the disable signal DISABLE is low. The control circuit 102 works normally, and the control signal CTRL is the output signal of the flip-flop FF2. The output signal of the gate circuit AND3 is low and the switch S2 is turned off. The voltage between the multifunctional pin and the ground is determined by the feedback signal FB.

If an over load condition happens, the feedback signal FB becomes larger than the threshold $V_{th2}$ and the fault signal FAULT becomes high. The output signal of the gate circuit OR1 is high and the fault timer 104 starts to time. Since the disable signal DISABLE is low then, the output signal of the gate circuit AND3 is low and the switch S2 is turned off. The voltage between the multifunctional pin and the ground is still determined by the feedback signal FB. The output signal of the gate circuit AND4 is low, and the output signal of the gate circuit OR2 is the control signal CTRL. The control signal CTRL is used as the pulse signal of the fault timer 104.

If the first time threshold $T_{fault}$

$$\left(T_{fault} = \sum_{p=1}^{2^{i-1}} T_p\right)$$ is reached, the disable signal DISABLE becomes high. The output signal of the gate circuit NOT2 is low, and the control circuit 102 is disabled. The control signal CTRL is low and the switch M is turned off. After the control circuit 102 being disabled, the capacitor C2 is charged by the reference voltage $V_{cc}$ through a resistor R1. When the voltage across the capacitor C2 becomes larger than the threshold $V_{th4}$, the signal PULSE2 as well as the output signal of the gate circuit AND3 is high. The switch S2 is turned on and the capacitor C2 is discharged. The signal PULSE2 is a periodical pulse signal because of the charge and discharge of the capacitor C2, wherein its period $T_{PULSE2}$ is determined by the reference voltage $V_{cc}$, the resistor R1, the capacitor C2 and the threshold $V_{th4}$. The fault timer 104 keeps timing. The disable signal DISABLE is high then, so the output signal of the gate circuit AND4 is the signal PULSE2. Since the control signal CTRL is low, the signal PULSE2 is used as the pulse signal of the fault timer 104.

If the second time threshold $T_{disable}$ ($T_{disable} = 2^{i-1*}T_{pulse2}$) is reached, the disable signal DISABLE is inversed and becomes low. The control circuit 102 is enabled again. The fault timer 104 keeps timing, and the control signal CTRL is used as its pulse signal. This process repeats till the over load condition disappears.

Generally, the capacitor C2 is a filter capacitor of the multifunctional pin, and its capacitance is small, such as 2.2nF or 1nF. In one embodiment, the switching regulator further comprises a resistor R2, a switch S3 and a gate circuit NOT3. The switch S3 and the resistor R2 are serially connected and electrically connected between the reference voltage $V_{cc}$ and the multifunctional pin. The input terminal of the gate circuit NOT3 is electrically connected to the fault timer 104 to receive the disable signal DISABLE, the output terminal is electrically coupled to the gate of the switch S3 to control the on and off of the switch S3. The switch S3 is turned on when the control circuit 102 is disabled, so as to adjust the period $T_{pulse2}$ of the signal PULSE2.

In one embodiment, the switches S2 and S3, the comparator COM7, the gate circuits AND3, AND4, NOT3, OR1 and OR2, the resistors R1 and R2, the control circuit 102, the fault detection circuit 103 and the fault timer 104 are integrated together. The switching regulator can be simply converted into auto-restart mode by replacing the capacitor C2 with a resistor.

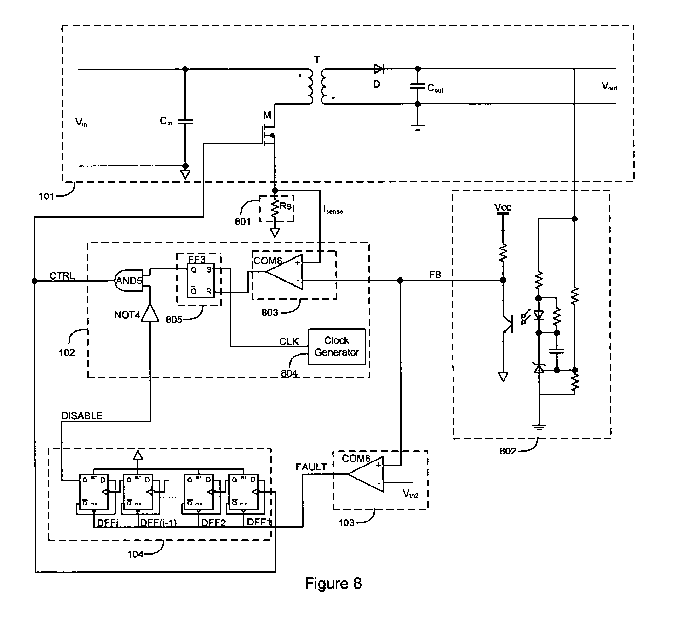

Figure 8 illustrates a fixed frequency controlled switching regulator with fault protection, in accordance with one embodiment of the present invention. It comprises a switching circuit 101, a control circuit 102, a fault detection circuit 103, a fault timer 104, a current sensing circuit 801 and a voltage feedback circuit 802. The configuration of the switching circuit 101, fault detection circuit 103, fault timer 104, current sensing circuit 801 and voltage feedback circuit 802 is similar to that of the corresponding circuit in Figure 6.

The control circuit 102 comprises a fifth comparison circuit 803, a clock generator 804, a third logic circuit 805, gate circuits AND5 and NOT4. The fifth comparison circuit 803 is electrically coupled to the current sensing circuit 801 and the voltage feedback circuit 802 to compare the current sensing signal $I_{sense}$ with the feedback signal FB. The clock generator 804 generates a clock signal CLK. The third logic circuit 805 is electrically coupled to the fifth comparison circuit 803 and the clock generator 804, controls the on and off of the switch M based on the comparison result and the clock signal CLK. The input terminal of the gate circuit NOT4 is electrically connected to the fault timer 104 to receive the disable signal DISABLE. One input terminal of the gate circuit AND5 is electrically connected to the output terminal of the gate circuit NOT4, the other input terminal is electrically connected to the output terminal of the third logic circuit 805. The output terminal of the gate circuit AND5 provides the control signal CTRL.

In one embodiment, the fifth comparison circuit 803 comprises a comparator COM8. The non-inverting input terminal of the comparator COM8 is electrically connected to the current sensing circuit 801 to receive the current sensing signal $I_{sense}$, the inverting input terminal is electrically connected to the voltage feedback circuit 802 to receive the feedback signal FB. The third logic circuit 805 comprises a flip-flop FF3. The flip-flop FF3 comprises a set terminal and a reset terminal, wherein the set terminal is rising edge effective and the reset terminal is high effective. The set terminal of the flip-flop FF3 is electrically connected to the clock generator 804 to receive the clock signal CLK, the reset terminal is electrically connected to the output terminal of the comparator COM8. The output terminal of the flip-flop FF3 is the output terminal of the third logic circuit 805.

The switching regulator shown in Figure 8 works under auto-restart mode. When the switching circuit 101 works normally, the feedback signal FB is smaller than the threshold $V_{th2}$, and the fault signal FAULT is low. Flip-flops DFF1~DFFi are all reset, and the disable signal DISABLE is low. The control circuit 102 works normally, and the control signal CTRL is the output signal of the flip-flop FF3. If an over load condition happens, the feedback signal FB becomes larger than the threshold $V_{th2}$ and the fault signal FAULT becomes high. The fault timer 104 starts to time, wherein the control signal CTRL is used as its pulse signal. If the first time threshold

$$T_{fault} \left( T_{fault} = \sum_{p=1}^{2^{i-1}} T_p \right) \text{ is reached, the disable signal}$$

DISABLE becomes high. The output signal of the gate circuit NOT4 is low, and the control circuit 102 is disabled. The control signal CTRL is low and the switch M is turned off.

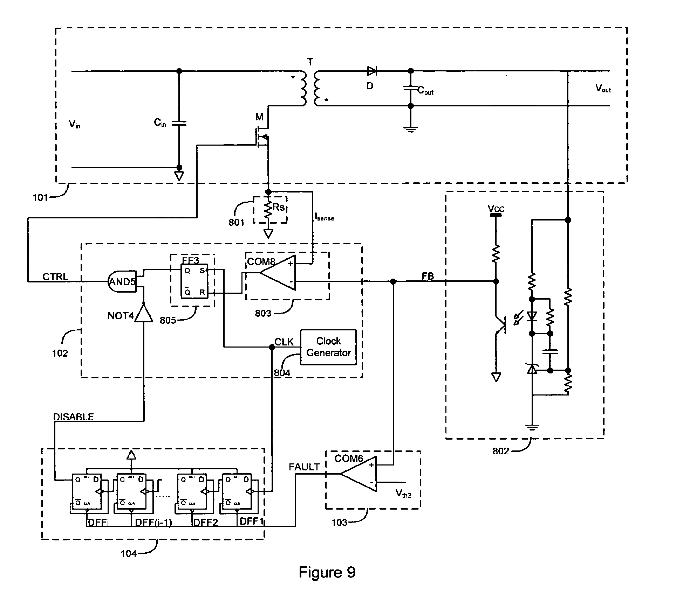

Figure 9 illustrates a fixed frequency controlled switching regulator with fault protection, in accordance with another embodiment of the present invention. Its configuration is similar to the switching regulator shown in Figure 8. However, the clock terminal of the flip-flop DFF1 is electrically connected to the clock generator 804 to receive the clock signal CLK. The clock signal CLK is used as the pulse signal of the fault timer 104.

The switching regulator shown in Figure 9 works under smart restart mode. When the switching circuit 101 works normally, the feedback signal FB is smaller than the threshold $V_{th2}$, and the fault signal FAULT is low. Flip-flops DFF1~DFFi are all reset, and the disable signal DISABLE is low. The control circuit 102 works normally, and the control signal CTRL is the output signal of flip-flop FF3.

If an over load condition happens, the feedback signal FB becomes larger than the threshold $V_{th2}$ and the fault signal FAULT becomes high. The fault timer 104 starts to time. If the first time threshold $T_{fault}$ ($T_{fault} = 2^{i-1} * T_{clk}$) is reached, the disable signal DISABLE becomes high. The control circuit 102 is disabled. The control signal CTRL is low and the switch M is turned off. The fault timer 104 continues timing.

If the second time threshold $T_{disable}$ ($T_{disable} = 2^{i-1} * T_{clk}$) is reached, the disable signal DISABLE is inversed and becomes low. The control circuit is enabled again. The fault timer 104 keeps timing. This process repeats till the over load condition disappears. In one embodiment, the first time threshold $T_{fault}$ and the second time threshold $T_{disable}$ are different through adjusting the frequency of the clock signal CLK.

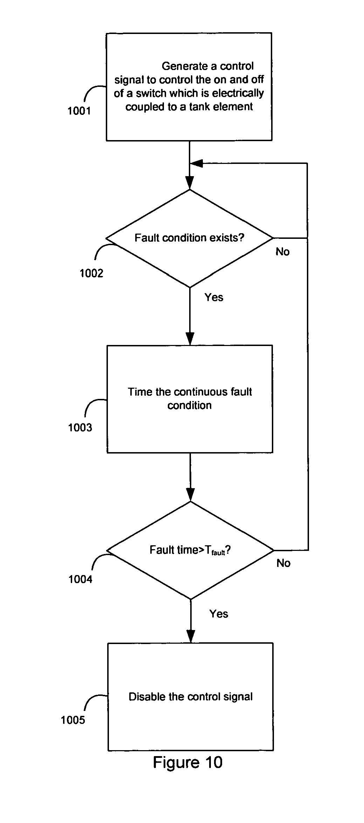

Figure 10 is a flow chart of a fault protection method used in a switching regulator, in accordance with one embodiment of the present invention. It comprises steps 1001~1004.

At step 1001, a control signal is generated to control the on and off of a switch which is electrically coupled to a tank element.

At step 1002, whether a fault condition exists in the switching regulator is monitored. If yes, go to step 1003, else, keep monitoring.

At step 1003, the continuous fault condition is timed.

At step 1004, whether the fault time is longer than a first time threshold $T_{fault}$ is judged. If yes, go to step 1005, else, go to step 1002.

At step 1005 the control signal is disabled and the switch is turned off.

In one embodiment, the control signal is enabled if the fault condition disappears after the control signal being disabled. In one embodiment, the fault timer is realized by a counter and the control signal is used as its pulse signal.

In another embodiment, the continuous disable condition is also timed. If the disable time is longer than a second time threshold $T_{fault}$, the control signal is enabled.

Obviously many modifications and variations of the present invention are possible in light of the above teachings. It is therefore to be understood that within the scope of the appended claims the invention may be practiced otherwise than as specifically described. It should be understood, of course, the foregoing disclosure relates only to a preferred embodiment (or embodiments) of the invention and that numerous modifications may be made therein without departing from the spirit and the scope of the invention as set forth in the appended claims. Various modifications are contemplated and they obviously will be resorted to by those skilled in the art without departing from the spirit and the scope of the invention as hereinafter defined by the appended claims as only a preferred embodiment(s) thereof has been disclosed.

The following statements provide general expressions of the disclosure herein.

> A. A switching regulator with fault protection, comprising:
>
> > a switch;
> > a control circuit electrically coupled to the switch to control switching of the switch;
> > a fault detection circuit configured to detect a fault condition in the switching regulator; and
> > a fault timer electrically coupled to the fault detection circuit and the control circuit, the fault timer being configured to time the fault condition and to disable the control circuit when the fault condition is continuous for a time period exceeding a first time threshold.
>
> B. The switching regulator of statement A, wherein the fault condition comprises one or more of the over load condition, over voltage condition, short circuit condition and under voltage condition.
>
> C. The switching regulator of statement A, wherein the control circuit is enabled when the fault condition disappears after the control circuit is disabled.

> D. The switching regulator of statement C, wherein the fault timer comprises a counter that uses a control signal generated by the control circuit as a pulse signal for counting, the control signal being configured to control the switching of the switch.
>
> E. The switching regulator of statement D, wherein the counter comprises multiple serially connected flip-flops.
>
> F. The switching regulator of statement C, wherein the fault timer is reset and starts to time again after the control circuit is disabled, and the control circuit is enabled when the control circuit is disabled for a time period that exceeds a second time threshold.
>
> G. The switching regulator of statement F, wherein the fault timer comprises a counter.
>
> H. The switching regulator of statement G, wherein a frequency of a pulse signal used by the counter to count is related to a switching frequency of the switch.
>
> I. The switching regulator of statement H, wherein the counter comprises multiple serially connected flip-flops.
>
> J. The switching regulator of statement H, further comprising:
>
> > a current sensing circuit electrically coupled to the switch, the current sensing circuit being configured to sense current flowing through the switch and to generate a current sensing signal representative of the current flowing through the switch; and
> > a voltage feedback circuit configured to sense an output voltage of the switching regulator and to generate a feedback signal based on the output voltage;
> > wherein the control circuit comprises:
> >
> > > a first current source, one terminal of the first current source receives a reference voltage;
> > > a first capacitor electrically connected between another terminal of the first current source and ground;
> > > a first switch electrically connected to the first capacitor in parallel;
> > > a first comparison circuit electrically coupled to the first capacitor, the voltage feedback circuit and the gate of the first switch, the first comparison circuit being configured to compare the voltage across the first capacitor with the feedback signal and to control the switching of the first switch based on the comparison;

a second comparison circuit electrically coupled to the current sensing circuit and configured to compare the current sensing signal with a first threshold; and

a first logic circuit electrically coupled to the first and second comparison circuits, the first logic circuit being configured to turn off the switch when the current sensing signal is larger than the first threshold and to turn on the switch when the voltage across the first capacitor is larger than the feedback signal under normal operation.

K. The switching regulator of statement J, wherein the output signal of the first comparison circuit is used as the pulse signal of the counter.

L. The switching regulator of statement K, wherein current values of the first current source before and after the control circuit being disabled are different.

M. The switching regulator of statement H, further comprising:

a current sensing circuit electrically coupled to the switch, the current sensing circuit being configured to sense current flowing through the switch and to generate a current sensing signal representative of the current flowing through the switch; and

a voltage feedback circuit configured to sense an output voltage of the switching regulator and to generate a feedback signal based on the output voltage;

wherein the control circuit comprises:

a third comparison circuit electrically coupled to the current sensing circuit and the voltage feedback circuit, the third comparison circuit being configured to compare the current sensing signal with the feedback signal;

a clock generator configured to generate a clock signal; and

a second logic circuit electrically coupled to the third comparison circuit and the clock generator, the second logic circuit being configured to turn off the switch when the current sensing signal is larger than the feedback signal and to turn on the switch at the rising edge of the clock signal under normal operation.

N. The switching regulator of statement M, wherein the clock signal is used as the pulse signal of the counter.

O. The switching regulator of statement G, wherein the control circuit, the fault detection circuit and the fault timer are integrated into an integrated circuit that comprises a multifunctional pin, the multifunctional pin being configured to allow for generating a pulse signal of the counter when the control circuit is disabled.

P. The switching regulator of statement O, wherein when the control circuit is enabled, the multifunctional pin allows for receiving a feedback signal, and a control signal generated by the control circuit to control the switching of the switch is used as a pulse signal of the counter.

Q. The switching regulator of statement P, further comprising:

a current sensing circuit, electrically coupled to the switch, the current sensing signal being configured to sense current flowing through the switch and to generate a current sensing signal representative of the current flowing through the switch;

a voltage feedback circuit configured to sense an output voltage of the switching regulator and to generate a feedback signal based on the output voltage; and

a switch voltage sensing circuit configured to sense a voltage across the switch and to generate a switch voltage sensing signal based on the voltage across the switch;

wherein the control circuit comprises:

a fourth comparison circuit electrically coupled to the current sensing circuit and the voltage feedback circuit, and configured to compare the current sensing signal with the feedback signal;

a fifth comparison circuit electrically coupled to the switch voltage sensing circuit, and configured to compare the switch voltage sensing signal with a second threshold; and

a third logic circuit electrically coupled to the fourth and fifth comparison circuits, the third logic circuit being configured to turn off the switch when the current sensing signal is larger than the feedback signal and to turn on the switch when the switch voltage sensing signal is smaller than the second threshold under normal operation.

R. The switching regulator of statement Q, wherein the multifunctional pin is electrically connected to the voltage feedback circuit, and is grounded through a capacitor, the integrated circuit further comprises:

a first resistor, one terminal of the first resistor receives a reference voltage, another terminal of the first resistor is electrically connected to the multifunctional pin;

a second switch electrically connected between the multifunctional pin and ground;

a comparator, a non-inverting input terminal of the comparator is electrically connected to the multifunctional pin, an inverting input terminal of the comparator receives a third threshold; and an AND gate, one input terminal of the AND gate is electrically connected to an output terminal of the comparator, another input terminal of the AND gate is electrically connected to the fault timer, the output terminal of the AND gate is electrically connected to the second switch to control switching of the second switch.

S. The switching regulator of statement R, wherein the integrated circuit further comprises a second resistor and a third switch serially connected to the second resistor, the second resistor and the third switch are electrically connected between the reference voltage and the multifunctional pin, the gate of the third switch is electrically coupled to the fault timer.

T. The switching regulator of statement S, wherein the third switch is turned on when the control circuit is disabled and turned off when the control circuit is enabled.

U. A fault protection method used in a switching regulator, the method comprising:

generating a control signal to control switching of a switch;

detecting when a fault condition exists in the switching regulator;

timing the fault condition when the fault condition is detected;

determining whether the fault condition exists a duration longer than a first time threshold; and disabling the control signal when the duration of the fault condition is longer than the first time threshold.

V. The fault protection method of statement U, wherein the fault condition comprises one or more of the over load condition, over voltage condition, short circuit condition and under voltage condition.

W. The fault protection method of statement U, further comprising enabling the control signal when the fault condition disappears after the control signal is disabled.

X. The fault protection method of statement W, wherein the fault timer is realized by a counter and the control signal is used by the counter as a pulse signal for counting.

Y. The fault protection method of statement W, further comprising:

timing a duration the control signal is disabled; and

enabling the control signal when the control signal is disabled for a duration longer than a second time threshold.

Z. The fault protection method of statement Y, wherein the duration of the fault condition and the duration the control signal is disabled are timed by a same counter

ZA. The fault protection method of statement Z, wherein the frequency of a pulse signal used in the counter for counting is related to a switching frequency of the switch.

**Claims**

1. A switching regulator with fault protection, comprising:

a switch;

a control circuit electrically coupled to the switch to control switching of the switch;

a fault detection circuit configured to detect a fault condition in the switching regulator; and

a fault timer electrically coupled to the fault detection circuit and the control circuit, the fault timer being configured to time the fault condition and to disable the control circuit when the fault condition is continuous for a time period exceeding a first time threshold.

2. The switching regulator of claim 1, wherein the fault condition comprises one or more of the over load condition, over voltage condition, short circuit condition and under voltage condition.

3. The switching regulator of claim 1, wherein the control circuit is enabled when the fault condition disappears after the control circuit is disabled.

4. The switching regulator of claim 3, wherein the fault timer comprises a counter that uses a control signal generated by the control circuit as a pulse signal for counting, the control signal being configured to control the switching of the switch.

**5.** The switching regulator of claim 4, wherein the counter comprises multiple serially connected flip-flops.

**6.** The switching regulator of claim 3, wherein the fault timer is reset and starts to time again after the control circuit is disabled, and the control circuit is enabled when the control circuit is disabled for a time period that exceeds a second time threshold.

**7.** The switching regulator of claim 6, wherein the fault timer comprises a counter.

**8.** The switching regulator of claim 7, wherein a frequency of a pulse signal used by the counter to count is related to a switching frequency of the switch.

**9.** The switching regulator of claim 8, wherein the counter comprises multiple serially connected flip-flops.

**10.** The switching regulator of claim 8, further comprising:

a current sensing circuit electrically coupled to the switch, the current sensing circuit being configured to sense current flowing through the switch and to generate a current sensing signal representative of the current flowing through the switch; and
a voltage feedback circuit configured to sense an output voltage of the switching regulator and to generate a feedback signal based on the output voltage;
wherein the control circuit comprises:

a first current source, one terminal of the first current source receives a reference voltage;
a first capacitor electrically connected between another terminal of the first current source and ground;
a first switch electrically connected to the first capacitor in parallel;
a first comparison circuit electrically coupled to the first capacitor, the voltage feedback circuit and the gate of the first switch, the first comparison circuit being configured to compare the voltage across the first capacitor with the feedback signal and to control the switching of the first switch based on the comparison;
a second comparison circuit electrically coupled to the current sensing circuit and configured to compare the current sensing signal with a first threshold; and
a first logic circuit electrically coupled to the first and second comparison circuits, the first logic circuit being configured to turn off the switch when the current sensing signal is larger than the first threshold and to turn on the switch when the voltage across the first capacitor is larger than the feedback signal under normal operation.

**11.** The switching regulator of claim 10, wherein the output signal of the first comparison circuit is used as the pulse signal of the counter.

**12.** The switching regulator of claim 11, wherein current values of the first current source before and after the control circuit being disabled are different.

**13.** The switching regulator of claim 8, further comprising:

a current sensing circuit electrically coupled to the switch, the current sensing circuit being configured to sense current flowing through the switch and to generate a current sensing signal representative of the current flowing through the switch; and
a voltage feedback circuit configured to sense an output voltage of the switching regulator and to generate a feedback signal based on the output voltage;
wherein the control circuit comprises:

a third comparison circuit electrically coupled to the current sensing circuit and the voltage feedback circuit, the third comparison circuit being configured to compare the current sensing signal with the feedback signal;
a clock generator configured to generate a clock signal; and
a second logic circuit electrically coupled to the third comparison circuit and the clock generator, the second logic circuit being configured to turn off the switch when the current sensing signal is larger than the feedback signal and to turn on the switch at the rising edge of the clock signal under normal operation.

**14.** The switching regulator of claim 13, wherein the clock signal is used as the pulse signal of the counter.

**15.** The switching regulator of claim 7, wherein the control circuit, the fault detection circuit and the fault timer are integrated into an integrated circuit that comprises a multifunctional pin, the multifunctional pin being configured to allow for generating a pulse signal of the counter when the control circuit is disabled.

**16.** The switching regulator of claim 15, wherein when the control circuit is enabled, the multifunctional pin allows for receiving a feedback signal, and a control signal generated by the control circuit to control the switching of the switch is used as a pulse signal of the counter.

17. The switching regulator of claim 16, further comprising:

a current sensing circuit, electrically coupled to the switch, the current sensing signal being configured to sense current flowing through the switch and to generate a current sensing signal representative of the current flowing through the switch;
a voltage feedback circuit configured to sense an output voltage of the switching regulator and to generate a feedback signal based on the output voltage; and
a switch voltage sensing circuit configured to sense a voltage across the switch and to generate a switch voltage sensing signal based on the voltage across the switch;
wherein the control circuit comprises:

a fourth comparison circuit electrically coupled to the current sensing circuit and the voltage feedback circuit, and configured to compare the current sensing signal with the feedback signal;
a fifth comparison circuit electrically coupled to the switch voltage sensing circuit, and configured to compare the switch voltage sensing signal with a second threshold; and
a third logic circuit electrically coupled to the fourth and fifth comparison circuits, the third logic circuit being configured to turn off the switch when the current sensing signal is larger than the feedback signal and to turn on the switch when the switch voltage sensing signal is smaller than the second threshold under normal operation.

18. The switching regulator of claim 17, wherein the multifunctional pin is electrically connected to the voltage feedback circuit, and is grounded through a capacitor, the integrated circuit further comprises:

a first resistor, one terminal of the first resistor receives a reference voltage, another terminal of the first resistor is electrically connected to the multifunctional pin;
a second switch electrically connected between the multifunctional pin and ground;
a comparator, a non-inverting input terminal of the comparator is electrically connected to the multifunctional pin, an inverting input terminal of the comparator receives a third threshold; and
an AND gate, one input terminal of the AND gate is electrically connected to an output terminal of the comparator, another input terminal of the AND gate is electrically connected to the fault timer, the output terminal of the AND gate is electrically connected to the second switch to control switching of the second switch.

19. The switching regulator of claim 18, wherein the integrated circuit further comprises a second resistor and a third switch serially connected to the second resistor, the second resistor and the third switch are electrically connected between the reference voltage and the multifunctional pin, the gate of the third switch is electrically coupled to the fault timer.

20. The switching regulator of claim 19, wherein the third switch is turned on when the control circuit is disabled and turned off when the control circuit is enabled.

21. A fault protection method used in a switching regulator, the method comprising:

generating a control signal to control switching of a switch;
detecting when a fault condition exists in the switching regulator;
timing the fault condition when the fault condition is detected;
determining whether the fault condition exists a duration longer than a first time threshold; and
disabling the control signal when the duration of the fault condition is longer than the first time threshold.

22. The fault protection method of claim 21, wherein the fault condition comprises one or more of the over load condition, over voltage condition, short circuit condition and under voltage condition.

23. The fault protection method of claim 21, further comprising enabling the control signal when the fault condition disappears after the control signal is disabled.

24. The fault protection method of claim 23, wherein the fault timer is realized by a counter and the control signal is used by the counter as a pulse signal for counting.

25. The fault protection method of claim 23, further comprising:

timing a duration the control signal is disabled; and
enabling the control signal when the control signal is disabled for a duration longer than a second time threshold.

26. The fault protection method of claim 25, wherein the duration of the fault condition and the duration the control signal is disabled are timed by a same counter

27. The fault protection method of claim 26, wherein the frequency of a pulse signal used in the counter for counting is related to a switching frequency of the switch.

Figure 1

Figure 2

Figure 3

Figure 4

Figure 5

Figure 6

Figure 7

Figure 8

Figure 9

Generate a control
signal to control the on and off
of a switch which is electrically
coupled to a tank element

1001

Fault condition exists?

1002

No

Yes

Time the continuous fault
condition

1003

Fault time>$T_{fault}$?

1004

No

Yes

Disable the control signal

1005

Figure 10

## REFERENCES CITED IN THE DESCRIPTION

**Patent documents cited in the description**

- CN 200910059878